# EUROPÄISCHE PATENTANMELDUNG

(11) **EP 3 053 684 A1**
(43) Veröffentlichungstag der Anmeldung: **10.08.2016**
(21) Anmeldenummer: 16000260.6
(22) Anmeldetag: 03.02.2016
(51) Int. Cl.: B23D 45/12, B23D 21/04

(54) **TRENNVORRICHTUNG ZUM TRENNEN EINES ZYLINDRISCHEN WERKSTÜCKS**

(30) Priorität: 05.02.2015 DE 102015001453
(71) Anmelder: Andreas Stihl AG & Co. KG, 71336 Waiblingen (DE)
(72) Erfinder: Kremsler, Dieter, D-71579 Spiegelberg (DE); Hohl, Jürgen, D-71336 Waiblingen (DE)
(74) Vertreter: Wasmuth, Rolf

(57) **Zusammenfassung**

Die Erfindung betrifft einen Führungswagen für eine Trennvorrichtung zum Schneiden eines zylindrischen Werkstücks (1). Der Führungswagen (10) weist einen Werkzeugträger (9) für die Trennvorrichtung (2) und ein das Werkstück (1) umschlingendes Spannglied (51) auf, das über ein Spannelement (78) geführt ist. Auf das Spannelement (78) wirkt eine Spannvorrichtung (20), die an einem Fahrgestell (11) des Führungswagens (10) angeordnet ist. Die Spannvorrichtung (20) übt über das Spannelement (78) auf das Spannglied (51) eine Spannkraft aus, wodurch das Spannglied (51) unverschiebbar auf dem Umfang (42) des Werkstücks (1) festgelegt ist. Das Fahrgestell (11) ist in Umfangsrichtung (43) des Werkstücks (1) längs des Spanngliedes (51) verfahrbar. Nach der Erfindung ist das Spannglied (51) ein Riemen (50) mit zwei Riemenenden (61, 65), wobei der Riemen (50) ein Verbindungselement (53) trägt, über das der Riemen (50) geschlossen ist. Das Verbindungselement (53) ist vom Führungswagen (10) nicht vollständig überfahrbar. Um dennoch einen vollständigen Schnitt über den Umfang ausführen zu können, ermöglicht der Werkzeugträger (9) eine Montage der Trennvorrichtung (2) in einer ersten Arbeitslage und alternativ in einer zweiten Arbeitslage.

## Beschreibung

Die Erfindung betrifft einen Führungswagen für eine Trennvorrichtung zum Trennen eines zylindrischen Werkstücks nach dem Oberbegriff des Anspruchs 1.

Aus der US 2,291,395 ist ein Führungswagen mit einer Trennvorrichtung zum Schneiden bzw. Trennen eines zylindrischen Werkstücks bekannt. Dieser Führungswagen weist einen Werkzeugträger für ein Trennwerkzeug auf und umfasst eine das Werkstück umschlingende Spannkette, die über Spannelemente geführt ist. Auf die Spannelemente wirkt eine Spannanordnung, die am Fahrgestell des Führungswagens vorgesehen ist. Diese Spannanordnung wirkt über das Spannelement auf die Spannkette und legt diese gegen auftretende Betriebskräfte unverschiebbar auf dem Umfang des Werkstücks fest. Das Fahrgestell ist in Umfangsrichtung des Werkstücks längs der Spannkette verfahrbar.

Die Spannkette ist endlos ausgebildet, so dass der Führungswagen über den gesamten Umfang des Werkstücks verfahrbar ist. Dies setzt allerdings voraus, dass die Spannkette über ein axiales Ende des Werkstücks aufgeschoben werden kann, um auf dem Werkstück positioniert zu werden.

In Einsatzfällen, in denen ein zu schneidendes Betonrohr in der Erde eingegraben ist und kein Ende freiliegt, kann mangels Montagemöglichkeit der Spannkette über ein axiales Ende des Betonrohres der Führungswagen nicht sicher auf dem Rohr festgelegt werden. Dies trifft auch auf stehende hohe Säulen zu, bei denen das freie Enden zwar vorhanden, aber schwer zugänglich ist.

Der Erfindung liegt die Aufgabe zugrunde, einen Führungswagen für eine Trennvorrichtung zum Trennen eines zylindrischen Werkstücks anzugeben, der auch bei Unzugänglichkeit der axialen Enden des Werkstücks sicher montiert und gehalten werden kann.

Die Aufgabe wird erfindungsgemäß nach den Merkmalen des Anspruchs 1 gelöst.

Erfindungsgemäß ist das Spannglied als offener Riemen ausgebildet, d. h., der Riemen hat ein erstes Riemenende und ein zweites Riemenende. Es ist vorgesehen, dass der Riemen ein Verbindungselement trägt, über das der Riemen zu schließen ist. Diese Ausführung eines offenen Riemens ermöglicht dem Benutzer, auch bei eingegrabenen Betonrohren oder hohen stehenden Säulen eine sichere Montage des Führungswagens auf dem Außenumfang des Werkstücks. Es muss lediglich das Betonrohr über seinen Umfang aufgegraben werden; die axialen Enden des Betonrohrs müssen nicht zugänglich sein. Ein Riemenende wird dann unter dem Betonrohr durchgeschoben und über das Verbindungselement mit dem anderen Riemenende verbunden. Im Fall der hohen Säule kann der Führungswagen in Arbeitshöhe festgelegt werden. Der geschlossene Riemen kann über die Spannvorrichtung auf dem Umfang des Werkstücks gegen auftretende Betriebskräfte unverschiebbar festgelegt werden.

Der Riemen kann ein flexibler Riemen mit einem inneren Aufbau sein, der in Zugrichtung des Riemens verlaufende Zugfäden oder eine Gewebestruktur umfasst. Die Zugfäden oder die Gewebestruktur des Riemens können in einem elastischen Material eingebettet sein. Die in Längsrichtung des Riemens verlaufenden Zugfäden können aus Kunststoff oder aus Metall bestehen. Zweckmäßig ist der Riemen ein Flachriemen. Mit dem verwendeten Begriff Riemen sind im weiteren Sinne auch Zugglieder gemeint, die aus Metallgliedern zusammengesetzt sind und eine Art Metallgliederkette bilden, wobei die einzelnen Metallglieder relativ zueinander beweglich sind, beispielsweise durch Bolzen oder Achsen miteinander verbunden sind.

Das Verbindungselement des geschlossenen Riemens ist vom Führungswagen nicht überfahrbar. Um dennoch jeden Abschnitt des Werkzeugumfangs mit der Trennvorrichtung anfahren zu können ist vorgesehen, die Trennvorrichtung auf dem Werkstückträger umsteckbar festzulegen. Die Trennvorrichtung kann in zwei Arbeitslagen auf dem Werkstückträger festgelegt werden. Eine zweite Arbeitslage der Trennvorrichtung entspricht dabei einer um eine Hochachse um 180° gedrehten ersten Arbeitslage der Trennvorrichtung. So kann beispielsweise zur Ausführung eines vollständigen Schnittes über den Umfang des Werkstückes die Trennvorrichtung auf dem Werkstückträger von einer ersten Arbeitslage in eine zweite Arbeitslage umgesteckt werden.

Die Trennvorrichtung weist ein Trennwerkzeug auf, das in die Trennfuge eingreift. Damit beim Umstecken der Trennvorrichtung das Trennwerkzeug relativ zur Trennfuge ausgerichtet liegt, ist vorgesehen, dass das Trennwerkzeug in der einen Arbeitslage einen ersten Abstand zum Führungswagen und in der zweiten Arbeitslage einen zweiten Abstand zum Führungswagen besitzt. Der erste Abstand ist dabei gleich groß wie der zweite Abstand gewählt.

Mit dem erfindungsgemäßen Führungswagen mit einer Trennvorrichtung sind zylindrische Werkstücke unterschiedlicher Durchmesser zu schneiden. Das Werkstück kann aus Beton mit oder ohne Bewehrung, aus Kunststoff, einem Materialverbund oder einem anderen Material bestehen. Das Werkstück kann ein Rohr oder auch ein Pfosten, ein Pfeiler oder dgl. sein. Der über das Verbindungselement zu schließende Riemen gewährleistet in einfacher Weise eine Anpassung an unterschiedliche Durchmesser des Werkstücks.

In Ausgestaltung der Erfindung ist das Spannglied ein Zahnriemen mit einer gezahnten Riemenseite; diese gezahnte Riemenseite liegt zweckmäßig dem Werkstückumfang zugewandt. Die Zahnung des Riemens hat den Vorteil, dass der Riemen im Verbindungselement in Zugrichtung mit einer formschlüssigen Verbindung festgelegt werden kann. Darüber hinaus hat die auf dem Werkstückumfang aufliegende gezahnte Riemenseite den Vorteil, dass auch bei Verschmutzungen des Werkstückumfangs die Zahnung zu einer sicheren Auflage am Werkstückumfang führt.

Der Werkzeugträger für die Trennvorrichtung ist vorteilhaft am Fahrgestell des Führungswagens vorgesehen. Die Trennvorrichtung kann auch getrennt vom Führungswagen genutzt werden. Der Führungswagen muss nur dann auf dem Umfang eines Werkstücks montiert werden, wenn dies für einen Umfangsschnitt mit der Trennvorrichtung notwendig ist.

Das Spannelement ist vorteilhaft eine auf einer Lagerwelle gehaltene Spannrolle, wobei die Lagerwelle Teil der Spannvorrichtung ist und zusammen mit der Spannrolle in eine Spannstellung kraftbeaufschlagt wird. Dabei ist die Lagerwelle der Spannrolle zweckmäßig über den Rahmen des Fahrgestells vorstehend ausgebildet. Das überragende freie Ende der ausragenden Lagerwelle bildet vorteilhaft den Werkzeugträger.

Die Lagerwelle ist zwischen Schwingenarmen einer Schwinge gehalten, die Teil der Spannvorrichtung ist. Die Schwinge ist in eine Spannstellung vorgespannt. Zweckmäßig ist die Schwinge von einem Druckglied in die Spannstellung kraftbeaufschlagt. Das Druckglied ist insbesondere eine Feder, wobei eine Schraubenfeder besonders geeignet ist. Das Druckglied greift vorteilhaft an einem Ende der Schwinge an, wobei die Spannrolle zwischen dem Ende der Schwinge und einer Schwenkachse der Schwinge vorgesehen ist.

Um die Vorspannung der Schwinge in die Spannstellung einzustellen oder ganz aufzuheben, ist zum Entspannen der Spannvorrichtung die Druckkraft über ein Stellglied veränderbar. Das Stellglied ist bevorzugt eine Gewindestange.

In Weiterbildung des Verbindungselementes ist dieses als Riemenschloss ausgebildet. Das Riemenschloss ist vorteilhaft so gestaltet, dass das Riemenschloss eine erste Schlossplatte und eine zweite Schlossplatte aufweist. Beide Schlossplatten sind an einem gemeinsamen Schlossträger befestigt. Das erste Riemenende wird in einem ersten Befestigungsabschnitt zwischen der ersten Schlossplatte und dem Schlossträger fixiert. Das zweite Riemenende liegt in einem zweiten Befestigungsabschnitt mit seiner gezahnten Riemenseite auf der zweiten Schlossplatte auf. Die Schlossplatten weisen vorteilhaft eine Zahnung auf, wobei die Zahnung der zweiten Schlossplatte einem Klemmhebel zugewandt liegt. Die Befestigungsabschnitte bzw. die Riemenenden, mit denen der Riemen im Riemenschloss gehalten ist, sowie die zugeordneten Schlossplatten greifen zumindest in der Ebene des Riemens über eine Zahnung formschlüssig ineinander ein. So ist der erste Riemenabschnitt formschlüssig mit der ersten Schlossplatte verzahnt und das zweite Riemenende bzw. ein zweiter Riemenabschnitt mit der zweiten Schlossplatte verzahnt. Das auf die zweite Schlossplatte aufgelegte zweite Riemenende ist zwischen dem Klemmhebel und der zweiten Schlossplatte sicher gehalten. Der Klemmhebel sichert den formschlüssigen Eingriff der gezahnten Riemenseite mit der Zahnung der Schlossplatte, so dass vom Klemmhebel selbst keine Zugkräfte in Umfangsrichtung des Riemens aufgenommen werden müssen. Es kann zweckmäßig sein, über den Klemmhebel eine geringe Klemmkraft auf den Riemen auszuüben.

Der Klemmhebel des Riemenschlosses ist zweckmäßig im oder am Schlossträger verschwenkbar gehalten. Der Klemmhebel hat eine Freigabestellung und eine Klemmstellung. In der Freigabestellung gibt der Klemmhebel den Riemen frei; in der Klemmstellung sichert der Klemmhebel den Riemen im Riemenschloss.

Um ein unbeabsichtigtes Öffnen des Riemenschlosses sicher zu vermeiden, ist vorgesehen, den Klemmhebel in seiner Klemmstellung mechanisch gegen eine Öffnungskraft zu sichern.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Darstellung eine auf einem zylindrischen Werkstück montierte Trennvorrichtung mit einem Führungswagen,
- Fig. 2: in einer perspektivischen Darstellung den Führungswagen nach Fig. 1 in Alleinstellung,
- Fig. 3: den Führungswagen nach Fig. 2 in einer um 180° gedrehten perspektivischen Darstellung,
- Fig. 4: einen Schnitt durch den Führungswagen längs der Linie IV-IV in Fig. 2,
- Fig. 5: in vergrößerter Darstellung den Schnitt gemäß Fig. 4 ohne Spannglied,
- Fig. 6: einen schematischen Schnitt durch den Führungswagen ohne Spannglied längs der Lagerwelle einer Spannrolle,
- Fig. 7: einen schematischen Schnitt durch den Führungswagen in Höhe der Spannvorrichtung,
- Fig. 8: eine perspektivische Darstellung des Führungswagens, des Spanngliedes und der Trennvorrichtung,
- Fig. 9: eine perspektivische Darstellung eines am Werkstück montierten Führungswagens mit der Trennvorrichtung,
- Fig. 10: einen schematischen Schnitt durch den an einem Werkstück montierten Führungswagen gemäß Fig. 9,
- Fig. 11: einen schematischen Axialschnitt durch das Werkstück und den montierten Führungswagen in Höhe der Lagerwelle einer Spannvorrichtung,
- Fig. 12: in vergrößerter Darstellung das Trennwerkzeug der Trennvorrichtung mit Schutzhaube,

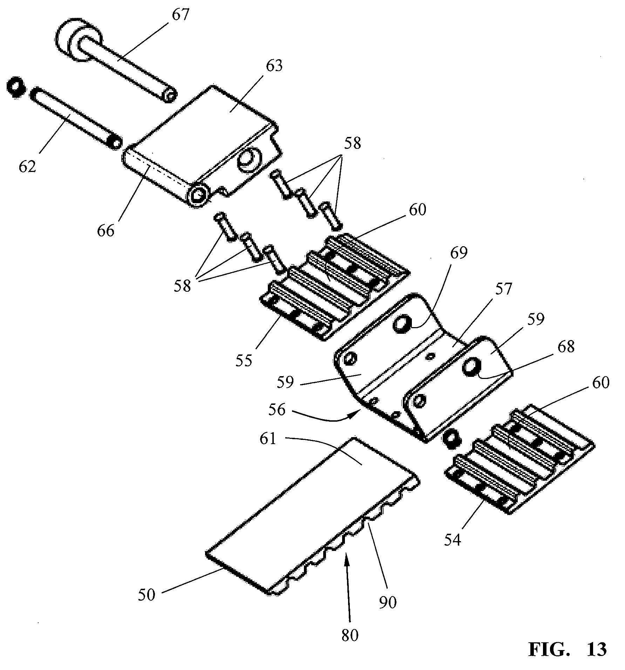

- Fig. 13: in Explosionsdarstellung den Aufbau des Riemenschlosses,
- Fig. 14: eine perspektivische Darstellung eines am Ende eines Spannriemens montierten Riemenschlosses,
- Fig. 15: einen Längsschnitt durch das Riemenschloss nach Fig. 15,
- Fig. 16: einen Querschnitt durch das Riemenschloss auf Höhe des Sicherungsbolzens für den Klemmhebel.

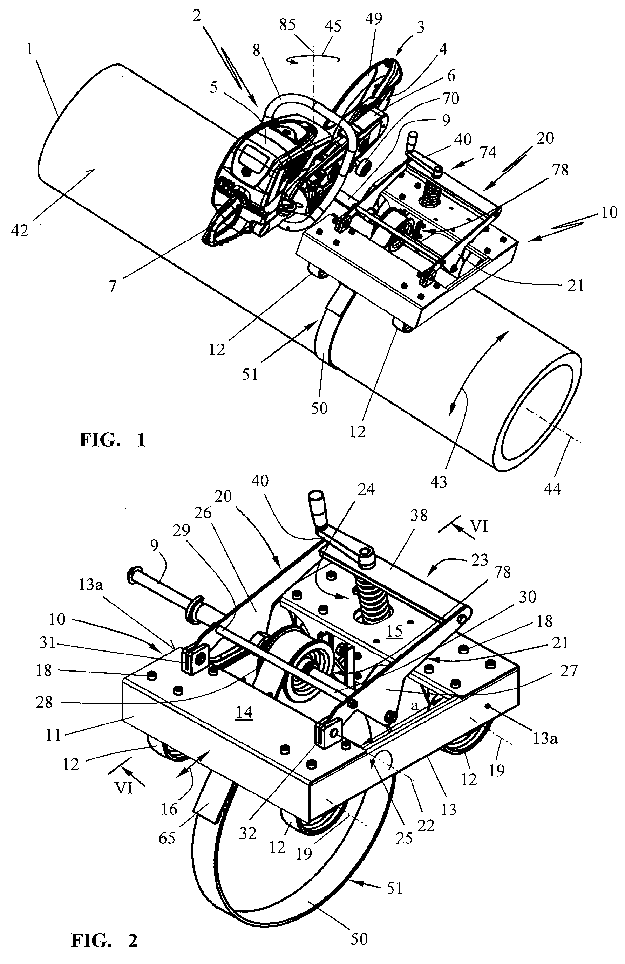

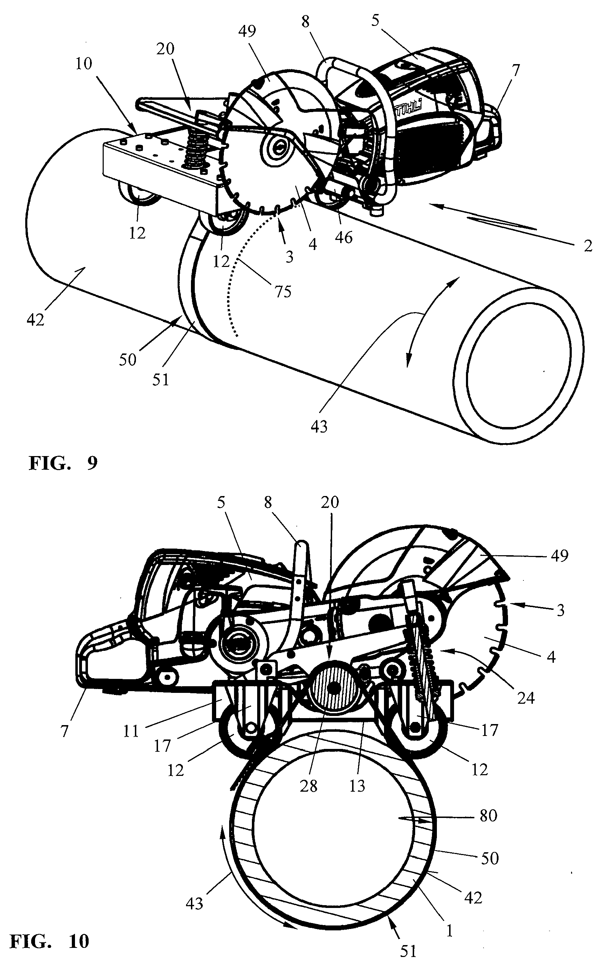

In Fig. 1 ist ein zylindrisches Werkstück 1 gezeigt, welches mit einer Trennvorrichtung 2 in Umfangsrichtung 43 getrennt bzw. geschnitten werden soll. Hierzu ist, wie insbesondere auch Fig. 9 zeigt, ein Trennwerkzeug 3 vorgesehen, im Ausführungsbeispiel eine Trennscheibe 4. Im gezeigten Ausführungsbeispiel ist die Trennvorrichtung 2 ein Trennschleifer 5, an dessen Ausleger 6 die Trennscheibe 4 gehalten und rotierend angetrieben ist. Der Trennschleifer 5 kann als Antriebsmotor einen Zweitaktmotor, einen Viertaktmotor oder auch einen Elektromotor aufweisen.

Im gezeigten Ausführungsbeispiel hat der Trennschleifer einen hinteren Handgriff 7 und einen dem Trennwerkzeug 3 zugewandt liegenden vorderen Bügelgriff 8. Die Trennvorrichtung 2 ist an einem Werkzeugträger 9 eines Führungswagens 10 gehalten.

Der Führungswagen 10 ist in den Figuren 2 bis 11 im Einzelnen dargestellt. Er besteht im Wesentlichen aus einem Fahrgestell 11 mit Laufrädern 12.

Das Fahrgestell 11 ist im Wesentlichen als rechteckförmiger Rahmen 13 aufgebaut, auf dessen Oberseite zwei schmale Tragplatten 14, 15 festgelegt sind. Die Tragplatten 14 und 15 liegen in Fahrtrichtung 16 des Führungswagens 10 mit Abstand a zueinander. An auf dem Rahmen 13 festgelegten Tragplatten 14 und 15 sind Radhalter 17 angeordnet; im gezeigten Ausführungsbeispiel sind die Radhalter 17 mit Befestigungsschrauben 18 an den Tragplatten 14 und 15 befestigt. An jeder Tragplatte 14, 15 sind über Radhalter 17 zwei Laufräder 12 montiert, wobei die Laufräder 12 einer Tragplatte 14, 15 um eine gemeinsame Drehachse 19 drehen. Die Laufräder 12 liegen unmittelbar benachbart zu den äußeren Rahmenträgern 13a des Rahmens 13, die sich in Fahrtrichtung 16 erstrecken. Die Tragplatten 14 und 15 des Führungswagens 10 halten ferner eine Schwinge 21 einer Spannvorrichtung 20. Die Schwinge 21 ist an der einen Traplatte 14 um eine Schwenkachse 22 verschwenkbar gehalten; an dem anderen Ende 23 der Schwinge 21 greift an einer Querstrebe 38 ein Druckglied 24 an, welches die Schwinge 21 in Richtung des Drehpfeils 25 kraftbeaufschlagt. Das Druckglied 24 ist zur Einstellung der Druckkraft mittels eines Stellgliedes 74 verstellbar.

Durch Schwingenarme 26 und 27 der Schwinge 21 ist eine Lagerwelle 30 gehalten. Zwischen den Schwingenarmen 26 und 27 ist auf der Lagerwelle 30 ein Spannelement 78 angeordnet. Im Ausführungsbeispiel ist das Spannelement 78 als eine Spannrolle 28 ausgeführt, die auf der Lagerwelle 30 drehbar montiert ist. Das Spannelement 78 liegt in Draufsicht auf den Führungswagen 10 nahe dem Zentrum des Fahrgestells 11. Dabei liegt das Spannelement 78 näher dem Trennwerkzeug 3 bzw. einer durch das Trennwerkzeug 3 im Werkstück eingebrachten Trennfuge 75 oder Schnittfuge (Fig. 9) als zu dem der Trennfuge 75 abgewandten Rahmenträger 13a des Rahmens 13. Das Fahrgestell 11 selbst weist - in Draufsicht auf den Führungswagen 10 - auf beiden axialen Seiten des Spannelementes 78 Laufräder 12 auf.

Zur Versteifung der U-förmig gestalteten Schwinge 21 ist zwischen den Enden der Schwingenarme 26 und 27 nahe der Schwenkachse 22 eine Versteifungsstrebe 29 vorgesehen. Die freien Enden der Schwingenarme 26 und 27 sind in Lagerböcken 31 und 32 gehalten, welche die Schwenkachse 22 bestimmen.

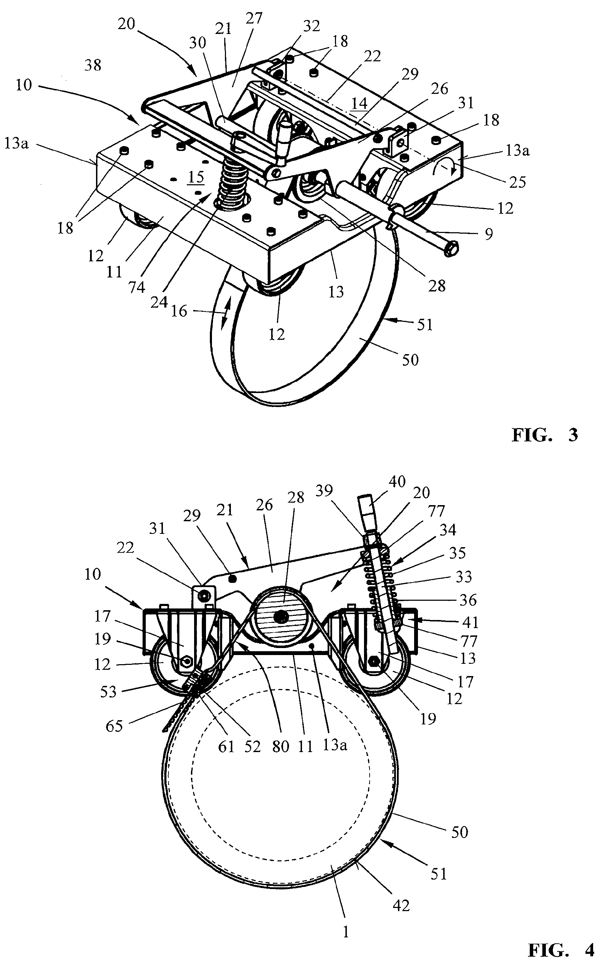

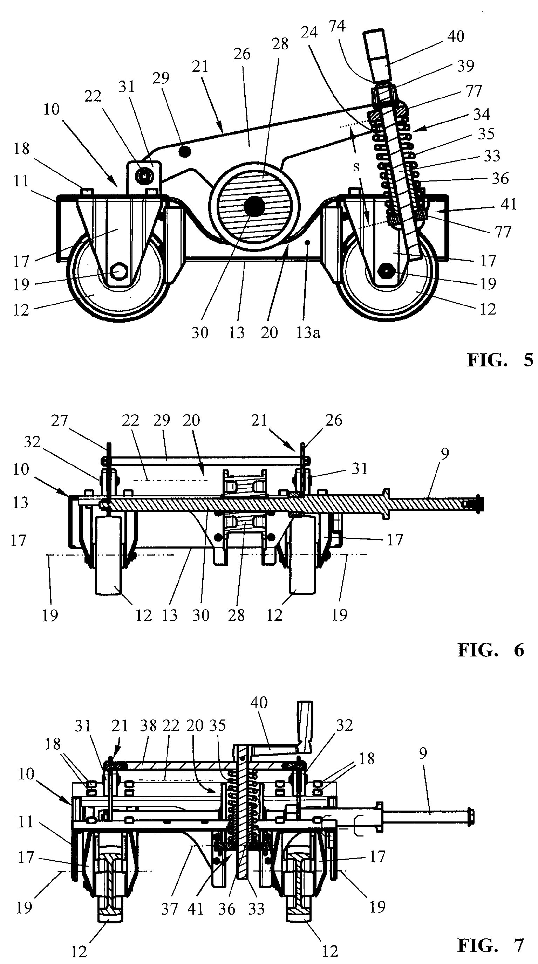

Das Druckglied 24 der Spannvorrichtung 20 ist in den Figuren 4, 5 und 7 im Einzelnen dargestellt. Es besteht im Wesentlichen aus einer Gewindestange 33 und einer Feder 34, die im gezeigten Ausführungsbeispiel als Schraubenfeder 35 ausgebildet ist. Die Gewindestange ist in eine Gewindebuchse 36 eingeschraubt, die innerhalb des Rahmens 13 über ein Schwenklager 41 an der Tragplatte 15 festgelegt ist. Fig. 7 zeigt, dass die Gewindestange 33 an der Tragplatte 15 gehalten ist, wobei die Gewindestange 33 durch ein Schwenklager 41 um eine Stellachse 37 verschwenkbar ist (Fig. 7). Die Stellachse 37 gewährleistet eine Lageausrichtung der Gewindestange 33 in Bezug zur Schwenklage der Schwinge 21 um die Schwenkachse 22.

Das Druckglied 24 stützt sich gegen die Querstrebe 38 der Schwinge 21 ab, wodurch die Schwinge 21 in Richtung des Drehpfeils 25 kraftbelastet ist und damit die auf der Lagerwelle 30 gehaltene Spannrolle 28 in Spannrichtung kraftbeaufschlagt. Im Ausführungsbeispiel ist das Druckglied 24 von einer Feder, insbesondere der Schraubenfeder 35 gebildet. Die Gewindestange 33 durchragt die Schraubenfeder 35, wobei die Schraubenfeder 35 an ihrem Enden in Stützlagern 77 (Figuren 4, 5) gehalten sind. Das eine Stützlager 77 liegt zwischen der Schraubenfeder 35 und der Querstrebe 38 der Schwinge 21; das andere Stützlager 77 bildet einen Teil des Schwenklagers 41 und leitet die Federkraft in den Rahmen 13 des Führungswagens 10 ab. Das freie Ende der Gewindestange 33 durchragt die Querstrebe 38 und stützt sich über ein Drucklager 39 auf der Querstrebe 39 ab; auf dem freien Ende ist eine Kurbel 40 montiert, die drehfest mit der Gewindestange 33 verbunden ist.

Das andere Ende der Gewindestange 33 greift in eine Gewindebohrung des Stützlagers 77 im Schwenklager 41 ein und durchragt diese. Durch Drehen der Kurbel 40 wird die Gewindestange 33 in das untere Stützlager 77 ein- oder ausgeschraubt, wodurch sich der Abstand s zwischen den Stützlagern 77 verändern lässt.

Durch Drehen der Gewindestange 33 wird das Druckglied 24, im Ausführungsbeispiel die Schraubenfeder 35, zusammengedrückt und die Schwinge 21 entgegen dem Drehpfeil 25 um die Schwenkachse 22 bewegt. Die über das Spannelement 78 bzw. die Spannrolle 28 auf ein Spannglied 51 aufgebrachte Spannkraft wird reduziert oder ganz aufgehoben. Das Druckglied 24 stützt sich dabei im Bereich des Stützlagers 77 bzw. der Gewindebuchse 36 an dem Schwenklager 41 ab. Das Druckglied 24, im Ausführungsbeispiel die Schraubenfeder 35, wirkt zwischen dem am Fahrgestell 11 festliegenden Schwenklager 41 und der Querstrebe 38 der Schwinge 21.

Zur Montage der Trennvorrichtung 2 am Führungswagen 10 ist der Werkzeugträger 9 vorgesehen, der vorteilhaft eine Verlängerung der Lagerwelle 30 des Spannelements 78 ist. Dies wird insbesondere aus dem Schnitt in Fig. 6 deutlich. Die Lagerwelle 30 ist an einem Ende verlängert ausgebildet und steht über den Rahmen 13 des Fahrgestells 11 seitlich über.

Wie in Fig. 1 dargestellt und in Fig. 4 im Schnitt schematisch wiedergegeben, wird der Führungswagen 10 über ein von einem Riemen 50 gebildeten Spannglied 51 auf dem zylindrischen Werkstück 1 z. B. kraftschlüssig gehalten. Der Riemen 50 ist ein offener Riemen. Der Riemen 50 hat ein erstes Riemenende 61 und ein zweites Riemenende 65. Die Länge des Riemens 50 ist größer als der in Umfangsrichtung 43 gemessene Außenumfang des Werkstücks 1, im Ausführungsbeispiel eines Rohres, z. B. ein Betonrohr, wie es in der Wasser- und Abwassertechnik verwendet wird.

Zur Montage des Spannglieds 51 bzw. des Riemens 50 auf dem zylindrischen Werkstück 1 kann der offene Riemen 50 unter dem Werkstück 1 durchgesteckt werden, um den Riemen 50 um den Werkstückumfang 42 zu legen. Der Riemen 50 wird dabei derart über die Spannrolle 28 geführt, dass die Spannrolle 28 innerhalb des geschlossenen Riemens 50 liegt. Die Spannrolle 28 liegt zwischen dem Riemen 50 und dem Werkstückumfang 42. Die Spannrolle 78 wirkt als Spannelement 78 der Spannvorrichtung 20. Über das Riemenschloss 52 wird der auf den Werkstückumfang 42 gelegte und über die Spannrolle 28 geführte Riemen 50 geschlossen. Vorteilhaft kann der Riemen 50 vom Benutzer handfest angezogen werden. Zweckmäßig überlappen sich die Riemenenden 61 und 65; das Riemenschloss 52 wirkt zwischen den überlappenden Riemenabschnitten und schließt den offenen Riemen 50.

Nach dem Anziehen des Riemens 50 auf den Werkstückumfang 42 wird die Kurbel 40 gedreht, damit die Druckkraft des Druckgliedes 24, im Ausführungsbeispiel der Feder 34, auf die Schwinge 21 wirken kann. Dabei wird die Gewindestange 33 soweit aus der Gewindebuchse 36 bzw. dem unteren Stützlager 77 ausgeschraubt, bis das Drucklager 39 von der Querstrebe 38 der Schwinge 21 abhebt, da der über der Spannrolle 28 laufende Riemen 50 keine weitere Verlagerung der Schwinge 21 in Richtung des Drehpfeils 25 zulässt. Die gesamte Kraft des Druckglieds 24 wirkt nun auf die Schwinge 21 und somit als Spannkraft auf den Riemen 50. Der Riemen 50 wird kraftschlüssig auf dem Werkstückumfang 42 festgelegt. Durch die Spannkraft werden die Laufräder 12 fest an den Werkstückumfang 42 angepresst, so dass ein Verrutschen des Führungswagens 10 in Richtung der Längsachse 44 des Werkstücks 1 vermieden ist. Der Führungswagen 10 ist auf dem Werkstück 1 in Richtung der Längsachse 44 des Werkstücks 1 gegen auftretende Betriebskräfte unverschiebbar festgelegt; in Längsrichtung des Riemens 50 hingegen ist der Führungswagen 10 in Fahrtrichtung 16 verfahrbar. Auf diese Weise kann mit der Trennvorrichtung 2 bzw. dem Trennwerkzeug 3 das Rohr in Umfangsrichtung getrennt bzw. geschnitten werden. Dabei ist ein Überfahren des Verbindungselementes 53, im Ausführungsbeispiel des Riemenschlosses 52, nicht möglich. Um dennoch einen vollständigen Schnitt über den Umfang ausführen zu können, ist die Trennvorrichtung 2 auf dem Werkzeugträger 9 umsteckbar. Die Trennvorrichtung 2 kann somit an dem gleichen Führungswagen 10 - und ohne den Führungswagen 10 vom Werkstück 1 zu lösen - in eine um eine Hochachse 85 um 180° gedrehte Lage montiert werden, wie in Fig. 1 durch den Drehpfeil 45 schematisch angedeutet. Nähert sich der Führungswagen 10 bei einem Umfangsschnitt dem Verbindungselement bzw. dem Riemenschloss 52, wird der Benutzer die Trennvorrichtung 2 vom Werkstückträger 9 abziehen und um die Hochachse 85 um 180° gedreht wieder aufstecken, wodurch der gesamte Werkstückumfang vom Trennwerkzeug 3 geschnitten werden kann, ohne dass das Riemenschloss 52 vom Führungswagen 10 überfahren werden muss. Die Hochachse 85 steht senkrecht, insbesondere parallel zur Ebene der Trennscheibe 4 und liegt zweckmäßig orthogonal zur Längsachse des Auslegers 6 und/oder zur Längsachse 44 des Werkstücks 1.

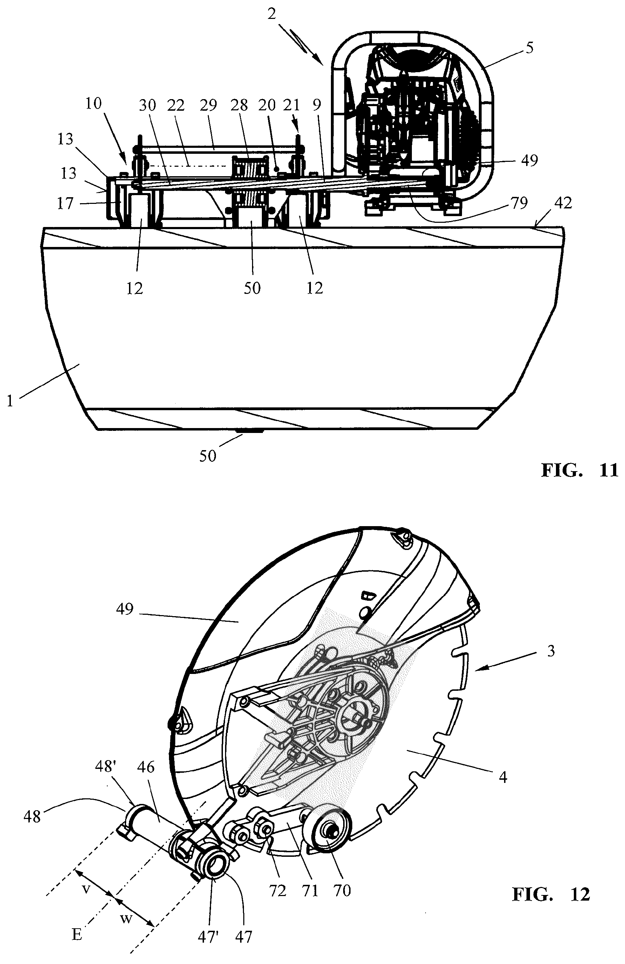

Die an der Trennvorrichtung 2 vorgesehene Aufnahme für den Werkzeugträger ist in Fig. 12 dargestellt. Die Aufnahme besteht aus einer Steckbuchse 46, die an beiden Enden 47, 48 offen ist. Die Steckbuchse 46 ist an der Schutzhaube 49 der Trennvorrichtung 2 festgelegt, vorzugsweise einteilig mit dieser ausgebildet. Dabei ist die Anordnung so ausgelegt, dass die Steckbuchse 46 durch das Trennwerkzeug 3, im Ausführungsbeispiel die Trennscheibe 4, mittig geteilt wird. Die Stirnseite 47' des Endes 47 der Steckbuchse 46 liegt mit einem Abstand w zur Ebene E des Trennwerkzeugs 3 bzw. der Trennscheibe 4; die Stirnseite 48' des Endes 48 der Steckbuchse 46 liegt mit einem Abstand v zur Ebene E des Trennwerkzeugs 3 bzw. des Trennschleifers 4. Der Abstand v entspricht dem Abstand w. In einer ersten Arbeitslage gemäß Figur 1 liegt die Stirnseite 47' an einer Anlagefläche 9' des Werkzeugträgers an. Die Ebene E der Trennscheibe 4 liegt somit mit einem Abstand w zur Anlagefläche 9'.

Wird die Arbeitslage gewechselt, der Trennschleifer also um die Hochachse 85 gedreht, wird der Werkzeugträger 9 in das andere Ende 48 der Steckbuchse 46 eingesteckt, wobei die Stirnseite 48' zur Anlage an der Anlagefläche 9' des Werkzeugträgers 9 kommt. Die Trennscheibe 4 liegt in dieser um 180° gedrehten Arbeitslage mit dem Abstand v zur Anlagefläche 9'. Da der Abstand v gleich groß dem Abstand w gewählt ist, liegt die Trennscheibe 4 - unabhängig von der gewählten Arbeitslage auf dem Werkstückträger 98 - immer mit einem gleichen Abstand zur Anlagefläche 9'. Daher wird das Trennwerkzeug 3, im Ausführungsbeispiel die Trennscheibe 4, immer in einer gleichen Trennfuge 75 arbeiten; durch das Umstecken der Trennvorrichtung auf dem Werkzeugträger 9 wird die Lage des Trennwerkzeugs 3 relativ zur Trennfuge 75 nicht verändert. Ein Versatz des Trennwerkzeugs 3 relativ zur Trennfuge 75 ist vermieden.

Zur Begrenzung der Schnitttiefe des Trennwerkzeugs 3 kann an der Schutzhaube 49 eine Laufrolle 70 an einem verstellbaren Hebel 71 vorgesehen sein. Der Hebel 71 ist - nach Lösen einer Befestigungsschraube 72 - als Stellhebel verstellbar, wodurch die Schnitttiefe der Trennscheibe 4 eingestellt werden kann. Die Laufrolle 70 stützt sich auf dem Werkstückumfang 42 ab. Alternativ kann die Laufrolle 70 auch als Kufe oder dgl. ausgebildet sein.

Wie aus Fig. 11 ersichtlich, greift das freie Ende 79 des Werkzeugträgers 9 in die Steckbuchse 46 ein und wird in dieser fixiert. Die Steckbuchse 46 ist an beiden Enden 47, 48 offen. Das freie Ende 79 des Werkzeugträgers 9 kann sowohl in das eine Ende 47 als auch in das andere Ende 48 eingesteckt werden, wodurch sich eine erste Arbeitslage und eine zweite, um 180° gedrehte Arbeitslage der Trennvorrichtung 2 auf dem Werkzeugträger 9 am Führungswagen 10 ergibt.

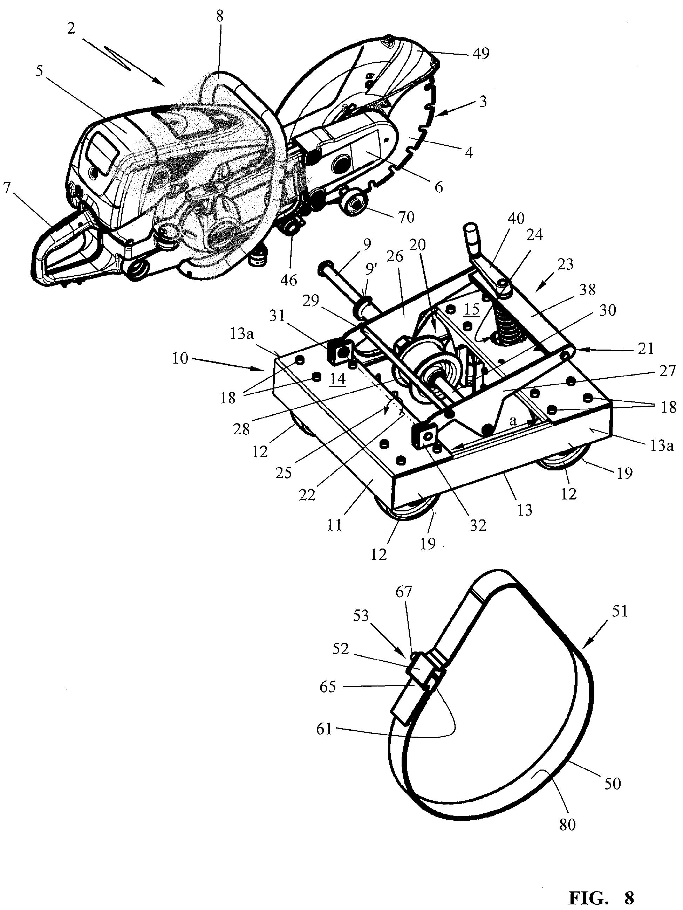

Der über das Riemenschloss 52 geschlossene Riemen 50 ist in Fig. 8 dargestellt. Das Riemenschloss 52 besteht - wie Fig. 3 zeigt - aus einer ersten Schlossplatte 54 und einer zweiten Schlossplatte 55, die an einem gemeinsamen Schlossträger 56 gehalten sind. Die Schlossplatten 54 und 55 sind mit einer Zahnung 60 ausgebildet. Auch der Riemen 50 - wie in Fig. 3 gezeigt ist - weist eine Zahnung 90 auf. In seinem Aufbau entspricht der Riemen 50 einem gezahnten Flachriemen. Der Riemen 50 ist ein flexibler Riemen, der in Querrichtung steif ausgebildet ist; ein Flachriemen weist diese Beschaffenheit auf. Der Riemen 50 hat einen inneren Aufbau, der in Zugrichtung des Riemens 50 verlaufende Zugfäden oder eine Gewebestruktur umfasst. Die Zugfäden oder die Gewebestruktur des Riemens 50 sind in einem elastischen Material eingebettet. Die in Längsrichtung des Riemens 50 verlaufenden Zugfäden können aus Kunststoff oder auch aus Metall bestehen.

Auch eine Metallgliederkette kann als Riemen im Sinne der Anmeldung verwendet werden. Der Begriff Riemen soll allgemein Zugglieder umfassen, somit auch Ketten und/oder Riemen, die aus Metallgliedern zusammengesetzt sind. Bei derartigen Gliederketten sind die einzelnen Kettenglieder relativ zueinander beweglich und beispielsweise durch Bolzen oder Achsen miteinander verbunden. Als Material kann Metall ebenso Verwendung finden wie Kunststoff und dgl.

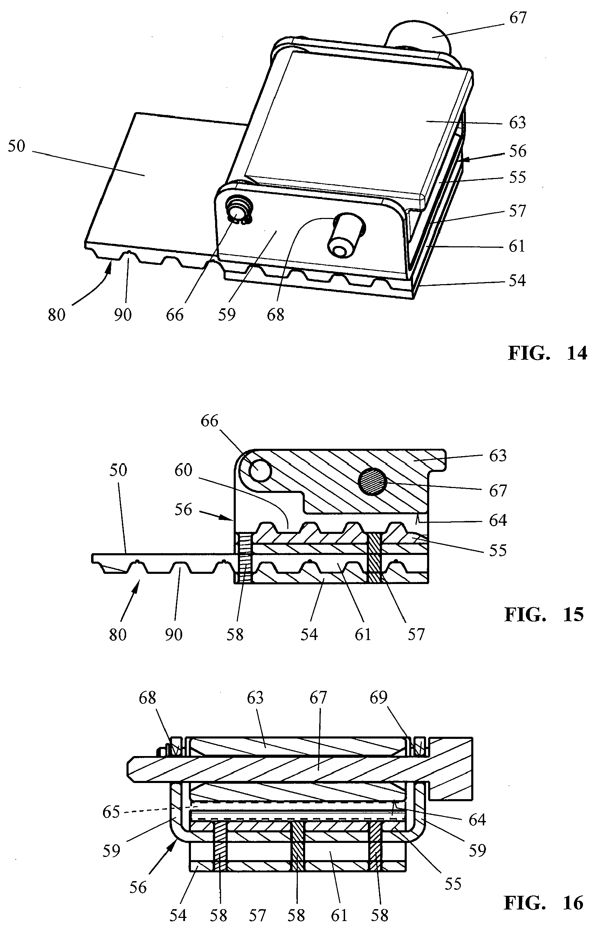

Das in Fig. 3 gezeigte Riemenende 61 wird mit seiner Zahnung 90 auf die Zahnung 60 der ersten Schlossplatte 54 aufgelegt und auf die glatte Seite des Riemens 50 der Schlossträger 56 aufgesetzt. Innerhalb des - im Querschnitt U-förmigen - Schlossträgers 56 liegt die zweite Schlossplatte 55, deren Zahnung 60 dem Boden 57 des Schlossträgers 56 abgewandt liegt. Dieser Aufbau wird - wie die Figuren 15 und 16 zeigen - unlösbar fest miteinander verbunden, z. B. durch Nieten 58. Es ergibt sich somit ein erster Befestigungsabschnitt der ersten Schlossplatte 54 mit dem Boden 57 des Schlossträgers 56. Ein zweiter Befestigungsabschnitt ist zwischen der zweiten Schlossplatte 55 und dem Boden 57 des Schlossträgers 56 ausgebildet. Beide Befestigungsabschnitte werden über die gemeinsamen Nieten 58 fixiert.

In den Schenkeln 59 des Schlossträgeres 56 ist mittels eines Lagerstiftes 62 ein Klemmhebel 63 verschwenkbar gehalten. Die Zahnung 60 der zweiten Schlossplatte 55 liegt einem Klemmhebel 63 zugewandt. Der Klemmhebel 63 weist eine Druckfläche 64 auf, die ein eingestecktes zweites Riemenende 65 mit der Zahnung 90 auf die zweite Schlossplatte 55 mit deren Zahnung 60 drückt. In Zugrichtung des Riemens 50 ergibt sich ein formschlüssiger Eingriff der Zahnung 90 des Riemens 50 mit der Zahnung 60 der zweiten Schlossplatte 55; in diesem formschlüssigen Eingriff wird das zweite Riemenende 65 durch den Klemmhebel 63 gehalten, der um eine Klemmachse 66 verschwenkbar ist, die zweckmäßig von einem Lagerstift 62 gebildet ist. Bei der Sicherung des Formschlusses zwischen der Zahnung 90 des Riemens 50 und der Zahnung 60 der zweiten Schlossplatte 55 durch den Klemmhebel 63 ist das Aufbringen einer Klemmkraft nicht zwingend notwendig; es ist ausreichend, wenn der Klemmhebel 63 ein Abheben der ineinander greifenden Zahnungen 60 und 90 verhindert. Es kann jedoch zweckmäßig sein, eine vorgegebene Klemmkraft auf den zwischen der zweiten Schlossplatte 55 und dem Klemmhebel 63 liegenden Riemenabschnitt, z. B. auf das zweite Riemenende 65 auszuüben.

Zum Sichern des geschlossenen Riemenschlosses 52 gegen eine Öffnungskraft ist vorzugsweise ein Sicherungsstift 67 vorgesehen, der von außen in Aufnahmeöffnungen 68, 69 im Schenkel 59 des Schlossträgers 56 eingesteckt ist und den Klemmhebel 63 durchragt. Dadurch ist eine formschlüssige Verriegelung des Klemmhebels 63 im Schlossträger 56 gewährleistet; ein unbeabsichtigtes Öffnen des Riemenschlosses 52 und ein Abheben der ineinander greifenden Zahnungen zwischen Schlossplatte und Riemen ist vermieden.

Wie die Figuren 1 und 9 zeigen, ist der Riemen 50 derart montiert, dass seine gezahnte Riemenseite 80 mit der Zahnung 90 auf dem Werkstückumfang 42 liegt. Die gezahnte Riemenseite 80 liegt somit auch auf dem Umfang der Spannrolle 28; es kann zweckmäßig sein, den Umfang der Spannrolle 28 gezahnt auszubilden.

Das Verbindungselement 53 kann auch als sogenanntes Ratschenschloss ausgebildet sein, mit dem durch Ratschen eines Zurrelementes das Spannglied 51, im Ausführungsbeispiel der Riemen 50, mechanisch festgezurrt werden kann. Zweckmäßig weisen die ineinander greifenden Zahnungen ein zum mechanischen Spannen geeignetes Profil auf, die zum Ratschen ein Übereinandergleiten der Zahnung ermöglichen, in Gegenrichtung jedoch formschlüssig ineinander eingreifen.

Die Zahnungen 60 der Schlossplatten 54, 55 und die Zahnung 90 des Riemens sind aufeinander abgestimmt, so dass sie formschlüssig ineinander greifen. Die geometrische Gestalt der Zahnung kann dem Einsatzzweck entsprechend gewählt werden. Im Ausführungsbeispiel verläuft die Zahnung 90 des Riemens 50 orthogonal zu seiner Längsrichtung.

## Patentansprüche

1. Führungswagen für eine Trennvorrichtung zum Trennen eines zylindrischen Werkstücks (1), bestehend aus einem Werkzeugträger (9) für die Trennvorrichtung (2) und einem das Werkstück (1) umschlingenden Spannglied (51), das über ein Spannelement (78) geführt ist, mit einer auf das Spannelement (78) wirkenden Spannvorrichtung (20), die an einem Fahrgestell (11) des Führungswagens (10) angeordnet ist, wobei die Spannvorrichtung (20) über das Spannelement (78) auf das Spannglied (51) wirkt und das Spannglied (51) unverschiebbar auf dem Umfang (42) des Werkstücks (1) festlegt, und das Fahrgestell (11) in Umfangsrichtung (43) des Werkstücks (1) längs des Spanngliedes (51) verfahrbar ist,
**dadurch gekennzeichnet, dass** das Spannglied (51) ein Riemen (50) mit zwei Riemenenden (61, 65) ist, dass der Riemen (50) ein Verbindungselement (53) trägt, und dass der Riemen (50) über das Verbindungselement (53) geschlossen ist, wobei das Verbindungselement (53) vom Führungswagen (10) nicht vollständig überfahrbar ist und der Werkzeugträger (9) eine Montage der Trennvorrichtung in einer ersten Arbeitslage und alternativ in einer zweiten Arbeitslage ermöglicht.

2. Führungswagen nach Anspruch 1,
**dadurch gekennzeichnet, dass** die zweite Arbeitslage der Trennvorrichtung (2) der um eine Hochachse (85) um 180° gedrehten ersten Arbeitslage der Trennvorrichtung (2) entspricht.

3. Führungswagen nach Anspruch 2,
**dadurch gekennzeichnet, dass** die Trennvorrichtung (2) ein Trennwerkzeug (3) aufweist, und das Trennwerkzeug (3) in der einen Arbeitslage einen ersten Abstand (v) zum Führungswagen (10) und in der zweiten Arbeitslage einen zweiten Abstand (w) zum Führungswagen (10) aufweist, und dass der erste Abstand (v) und der zweite Abstand (w) gleich sind.

4. Führungswagen nach Anspruch 1,
**dadurch gekennzeichnet, dass** das Spannglied (51) ein Zahnriemen ist, dessen gezahnte Riemenseite (80) dem Werkstückumfang (42) zugewandt liegt.

5. Führungswagen nach Anspruch 1,
**dadurch gekennzeichnet, dass** der Werkzeugträger (9) für die Trennvorrichtung (2) am Fahrgestell (11) des Führungswagens (10) vorgesehen ist.

6. Führungswagen nach Anspruch 1,
**dadurch gekennzeichnet, dass** das Spannelement (78) eine auf einer Lagerwelle (30) gehaltene Spannrolle (28) ist, und dass die Lagerwelle (30) Teil der Spannvorrichtung (20) ist und die Spannrolle (28) in eine Spannstellung kraftbeaufschlagt.

7. Führungswagen nach Anspruch 6,
**dadurch gekennzeichnet, dass** die Lagerwelle (30) der Spannrolle (28) über den Rahmen (13) des Fahrgestells (11) vorsteht und den Werkzeugträger (9) bildet.

8. Führungswagen nach Anspruch 6,
**dadurch gekennzeichnet, dass** die Lagerwelle (30) zwischen Schwingenarmen (26, 27) einer Schwinge (21) gehalten ist, wobei die Schwinge (21) Teil der Spannvorrichtung (20) ist und von einem Druckglied (24) in eine Spannstellung kraftbeaufschlagt ist.

9. Führungswagen nach Anspruch 8,
**dadurch gekennzeichnet, dass** das Druckglied (24) eine Feder (34), insbesondere eine Schraubenfeder (35) ist.

10. Führungswagen nach Anspruch 8,
**dadurch gekennzeichnet, dass** das Druckglied (24) an einem Ende (23) der Schwinge (21) angreift und die Spannrolle (28) zwischen dem Ende (23) und einer Schwenkachse (22) der Schwinge (21) liegt.

11. Führungswagen nach Anspruch 8,
**dadurch gekennzeichnet, dass** zum Entspannen der Spannvorrichtung (20) die Spannkraft des Druckgliedes (24) über ein Stellglied (74) aufhebbar ist.

12. Führungswagen nach Anspruch 1,
**dadurch gekennzeichnet, dass** das Verbindungselement (53) ein Riemenschloss (52) ist.

13. Führungswagen nach Anspruch 12,
**dadurch gekennzeichnet, dass** das Riemenschloss (52) eine erste Schlossplatte (54) und eine zweite Schlossplatte (55) aufweist, die an einem gemeinsamen Schlossträger (56) befestigt sind, wobei ein erstes Riemenende (61) zwischen der ersten Schlossplatte (54) und dem Schlossträger (56) fixiert ist und ein zweites Riemenende (65) zwischen der zweiten Schlossplatte (55) und einem Klemmhebel (63) gehalten ist.

14. Führungswagen nach Anspruch 13,
**dadurch gekennzeichnet, dass** der Klemmhebel (63) am Schlossträger (56) verschwenkbar gehalten ist und in einer Freigabestellung den Riemen (50) freigibt und in einer Klemmstellung den Riemen (50) im Riemenschloss (52) festlegt.

15. Führungswagen nach Anspruch 13,
**dadurch gekennzeichnet, dass** die Riemenenden (61, 65) in der Ebene des Riemens (50) im Riemenschloss (52) formschlüssig gehalten sind.
